# EUROPÄISCHE PATENTSCHRIFT

(11) **EP 2 322 353 B1**
(45) Veröffentlichungstag und Bekanntmachung des Hinweises auf die Patenterteilung: **29.07.2015**
(21) Anmeldenummer: 10164869.9
(22) Anmeldetag: 03.06.2010
(51) Int. Cl.: B41M 5/00, B41M 5/382, C03C 17/22, C03C 17/00

(54) **Verfahren zum Aufbringen einer dauerhaften Prozessmarke auf einem Produkt, insbesondere Glas**
Method for applying a permanent process mark to a product, particularly glass
Procédé d'application d'une marque de processus durable sur un produit, notamment du verre

(30) Priorität: 19.06.2009 DE 102009029903
(43) Veröffentlichungstag der Anmeldung: 18.05.2011
(73) Patentinhaber: tesa SE, 20253 Hamburg (DE)
(72) Erfinder: Koops, Arne, 23881 Neu-Lankau (DE); Reiter, Sven, 22049 Hamburg (DE); Bunde, Bernd, 20253 Hamburg (DE); Postel, Olaf, 50739 Köln (DE)

(56) Entgegenhaltungen:
- EP-A1- 2 078 614
- WO-A1-03/080334
- WO-A1-03/080335
- WO-A2-03/035411

## Beschreibung

Die Erfindung betrifft ein Verfahren zum Aufbringen einer dauerhaften Prozessmarke auf einem Produkt, insbesondere Glas.

Unter einer Prozessmarke wird im erfindungsgemäßen Sinne eine Markierung verstanden, die auf einem Gut aufgebracht wird, und die Prozessmarke auf dem Gut in einem weiteren Verfahren durch Sensoren, insbesondere optische Sensoren, ausgelesen wird, und das Gut auf Basis der aus der Prozessmarke gewonnenen Informationen daraufhin exakt in eine vorgegebene Position ausgerichtet wird.

Die Anbringung derartiger Prozessmarken ist in nahezu allen Produktionsabläufen unerlässlich. Bei der Automatisierung helfen die auf dem Produktionsgut aufgebrachten Marken, für optische Sensoren eine kontinuierliche Ablaufkontrolle und Steuerung in den Produktionsprozessen zu gewährleisten.

Aus verschiedenen Gründen sind diese Prozessmarken nur schwer in eine definierte Position zu bringen. Vielfach behilft man sich bisher mit Nocken, Vorsprüngen, Nuten und beispielsweise aufgedruckten Markierungen, die dann mechanisch oder optisch abgetastet werden und zur Ausrichtung verwendet werden.

Die Marken werden häufig durch Verfahren aufgetragen, die auf Basis der Vervielfältigung eines Einzelrapports beruhen. Hierzu gehören rotative und intermittierende Markierprozesse, so dass die Marken in einem gleichen Abstand zueinander vorliegen.

Prozessmarken werden zur Kontrolle und Steuerung eingesetzt, beispielsweise zum automatischen Positionieren von Druckplatten. Um im Mehrfarbendruck die einzelnen Farben positionsgenau zueinander zu bringen, wird von jeder Druckplatte eine Marke mit auf das Drucksubstrat gedruckt. Die Positionen der Prozessmarken der einzelnen Farben, auch Passermarken genannt, werden detektiert und miteinander verglichen. Dies gibt Aufschluss über die Positionierung der Druckplatte relativ zum Untergrund und dient als Basis für die genaue Ausrichtung der Druckplatten.

Prozessmarken werden häufig verwendet, damit Werkstücke in einer bestimmten Ausrichtung verbunden werden können. Hierzu werden computergestützte Detektions- und Ausrichtungssysteme verwendet, bei dem das Verfahren immer wieder auf die fortlaufend aufgenommenen Kameraaufnahmen der Prozessmarken, auch als Justier- oder Positioniermarken bekannt, angewendet wird, bis die Werkstücke richtig positioniert ist.

Nachteilig bei den bekannten Prozessmarken ist, dass diese üblicherweise in einem intermittierenden Prozess, beispielsweise in einem Druckverfahren, erzeugt werden und somit nur identische Inhalte auftragen können. Zum Beispiel werden auf einer endlosen Bahn in regelmäßigen Abständen Steuermarken in Form eines Rechtecks aufgedruckt werden. Diese Steuerungsmarken werden durch ein Detektionssystem erkannt und lösen dadurch unterschiedliche Vorgänge aus, beispielsweise wird die Bahn gefaltet oder geschnitten.

Weiterhin werden beim Zusammenbau von Geräten Prozessmarken verwendet, damit die einzelnen Bauteile die korrekte Ausrichtung zueinander erfahren. Auch dabei wird durch ein optisches Gerät die Steuermarke erfasst. Dieses stellt Abweichungen zwischen aktueller Lage des Gegenstandes und gewünschter fest, so dass der Gegenstand entsprechend nachgeführt wird. Die Prozessmarke beinhaltet damit nur die Information einer Position. Denkbare weitere Informationen der Steuermarke wie Toleranzen und Qualität der Bauteile, die in nachfolgenden Prozessen Berücksichtigung finden könnten, sind nicht bekannt.

Typischerweise sollten die Prozessmarken aus geeigneten Material bestehen, so dass ausgeschlossen ist, dass
- sich die angebrachte Marke ungewollt vom Gegenstand löst,
- die Beschriftung verläuft, verwischt oder durch Abrieb oder Aufhellung unleserlich wird und/oder
- die Funktionstüchtigkeit des Gegenstandes eingeschränkt wird.

Die WO03/080334 A1 offenbart eine mehrschichtige Laser-Transferfolie zum dauerhaften Beschriften von Bauteilen aus zumindest einer Trägerschicht, wobei auf der unteren Seite der Trägerschicht eine erste Klebeschicht zumindest partiell vorhanden ist. Auf der Seite der Trägerschicht der Laser-Transferfolie, auf der sich die erste Klebeschicht befindet, sind wenigstens zwei Pigmentschichten vorhanden, vorzugweise eine zumindest partiell aufgetragene erste Pigmentschicht, die zumindest ein Glasflusspigment enthält, und eine zumindest partiell aufgetragene zweite Pigmentschicht, die zumindest ein lasersensibles Pigment enthält.

Die WO03/080335 A1 beschreibt eine ähnliche mehrschichtige Laser-Transferfolie zum dauerhaften Beschriften von Bauteilen aus zumindest einer Trägerschicht, wobei auf der unteren Seite der Trägerschicht eine erste Klebeschicht zumindest partiell vorhanden ist. Auf der Seite der Trägerschicht der Laser-Transferfolie, auf der sich die erste Klebeschicht befindet, sind wenigstens zwei ein lasersensibles Pigment enthaltende Pigmentschichten zumindest partiell vorhanden sind. Die Konzentrationen des lasersensiblen Pigments in den Pigmentschichten sind dabvei unterschiedlich.

Die WO 03/035411 A1 zeigt eine Laser-Transferfolie zum dauerhaften Beschriften von Bauteilen aus zumindest einer Trägerschicht, wobei auf der unteren Seite der Trägerschicht eine Klebeschicht zumindest partiell vorhanden ist. Auf der Trägerschicht und/oder Klebeschicht ist zumindest partiell eine Pigmentschicht aufgetragen, die zumindest ein lasersensibles Pigment enthält.

Die nachveröffentlichte EP 2 078 614 A1 (dieses Dokument zählt zum Stand der Technik nach Art. 54 (3) EPÜ) zeigt eine Pigmentschicht zur dauerhaften Markierung eines Substrats, insbesondere von. Glas, basierend auf einer Polymermatrix, welche auf energiereiche Strahlung, insbesondere eine Laserbestrahlung, überwiegend mit Pulverisierung reagiert. Die Pigmentschicht weist als Bestandteile einen Titanspender sowie einen unter Energieeinstrahlung freien Kohlenstoff bereitstellenden Kohlenstoffspender auf.

Aufgabe der vorliegenden Erfindung ist es, ein Verfahren zum Aufbringen einer dauerhaften Prozessmarke auf einem Produkt, insbesondere Glas, anzugeben, das ein schnelles und präzises und insbesondere individuelles Beschriften ermöglicht. Zudem soll die Beschriftung bauteilschonend erfolgen, nicht zerstörungsfrei ablösbar sein und dennoch einen hohen Kontrast, ein hohes Auflösungsvermögen und eine hohe Temperaturbeständigkeit aufweisen. Des Weiteren soll es ermöglicht werden, dass die Prozessmarke auch individuelle Information enthält und nicht nur als Positionsmarke verwendet wird.

Gelöst wird diese Aufgabe, das Aufbringen einer dauerhaften Prozessmarke auf einem Produkt, insbesondere Glas, durch ein Verfahren, wie im Hauptanspruch dargelegt ist. Vorteilhafte Ausgestaltungen und Weiterbildungen sind Gegenstand der jeweiligen Unteransprüche.

Demgemäß betrifft die Erfindung ein Verfahren, bei dem ein Laser die Prozessmarke auf dem Produkt aufbringt.

Dies erfolgt beispielsweise, indem ein Laser das Gut mit der Prozessmarke direkt beschriftet. Es sind leistungsfähige steuerbare Laser zum Einbrennen von Markierungen wie alphanumerischen Kennzeichnungen, Codierungen und dergleichen verbreitet. Das zu beschriftende beziehungsweise das zur Beschriftung eingesetzte Material sowie das Beschriftungsverfahren weisen vorteilhafterweise die folgenden Eigenschaften auf:
- Das Material ist schnell beschriftbar.
- Es wird ein hohes räumliches Auflösungsvermögen erreicht.
- Material und Beschriftungsverfahren sind in der Anwendung möglichst einfach.
- Bei der Beschriftung gegebenenfalls entstehende Zersetzungsprodukte wirken nicht korrosiv.
- Das Beschriftungsverfahren besitzt keinen oder nur geringen Einfluss auf die mechanische Stabilität des Bauteils.

Besonders vorteilhaft lässt sich die Prozessmarke mit einer Pigmentschicht herstellen, die auf einer Polymermatrix basiert. Neben der Polymermatrix enthält die Pigmentschicht als weiteren Bestandteil einen Titanspender. Als Titanspender wird dabei reines Titan oder eine Titanverbindung bezeichnet, das beziehungsweise die eine Affinität haben, unter Energieeinwirkung jedenfalls kurzzeitig freies Titan als Reaktionspartner bereitzustellen. Gegebenenfalls kann die Bereitstellung des freien Titans auch über den Weg eines titanhaltigen Zwischenprodukts erfolgen. Ferner ist ein Kohlenstoffspender vorgesehen, also ein Material, das unter Energieeinstrahlung freien, also chemisch nicht gebundenen Kohlenstoff bereitstellt. Hierbei kann es sich um eine zu der Polymermatrix zusätzliche Kohlenstoffverbindung handeln, gegebenenfalls kann aber auch die Polymermatrix selbst als Quelle freien Kohlenstoffs ausreichend sein.

Es ist wesentlich, dass die Polymermatrix unter Bestrahlung mit energiereicher Laserstrahlung mit Pulverisierung reagiert. Während der Pulverisierung wird freier Kohlenstoff gebildet sowie die Titanverbindung aufgespalten. Als Markierung wird dabei eine neue Titanverbindung, insbesondere Titancarbid auf dem zu markierenden Substrat abgeschieden. Bei einer ausreichend hohen Konzentration freien Kohlenstoffs wird dieser zudem in der neuen Titanverbindung eingelagert, wodurch der Kontrast der Markierung gezielt beeinflusst werden kann.

Diese laserinduzierte Pulverisierung wird vorzugsweise bei spröden Werkstoffen erzielt. Bei genügend hoher Leistung bildet sich in Verbindung mit einem Plasma eine Dampfkapillare aus. Durch die Kapillare nimmt die Absorption wesentlich höhere Werte an, so dass die Laserstrahlung tiefer in das Material eindringen kann und den Kunststoff partikelförmig um die Wärmeeinflusszone explosionsartig aus der Matrix herausschleudern kann. Dieser Effekt kann optimal zur Herstellung des Transfermaterials genutzt werden, indem diese Kapillare als Reaktandenraum dient sowie das entstandene Pulver als Titan- und Kohlenstoffspender zur Synthese des Titancarbids umgesetzt wird.

Als Polymermatrix wird vorliegend jede Matrix basierend auf polymeren Bestandteilen bezeichnet. Neben den polymeren Bestandteilen kann die Matrix auch beliebige nicht polymere Bestandteile enthalten, lediglich der Hauptbestandteil sollte polymerer Art sein. Insbesondere bezeichnet der Begriff "Polymermatrix" auch eine Mischung von Grundpolymeren. In besonders bevorzugter Ausgestaltung handelt es sich bei der Polymermatrix um eine duroplastische Polymermatrix. Es hat sich gezeigt, dass insbesondere Duroplaste besonders geeignet sind, um eine Pulverisierung zu erzielen.

Es ist vorgesehen, dass die Pigmentschicht frei von unter Energieeinstrahlung aufschmelzenden Kunststoffen, insbesondere auch frei von anderen aufschmelzenden Materialien, ausgebildet ist. Hierdurch kann einerseits der Produktaufbau möglichst einfach gehalten werden, zum anderen wird eine Beschriftung nicht durch das Schmelzen von Kunststoff oder anderen Materialien beeinträchtigt. Zudem kann bei der vorliegenden Pigmentschicht auch auf eine Glasfritte als Bestandsteil verzichtet werden. Überraschenderweise hat sich gezeigt, dass eine dauerhafte Bindung der Markierung insbesondere an Glas auch ohne eine Glasfritte erzielt wird.

Unter Glasfritte versteht man üblicherweise ein Zwischenprodukt bei der Herstellung von Glasschmelzen. Die Glasfritte ist ein krümelig-poröses Glas, welches durch das Abschrecken eines bei hohen Temperaturen erschmolzenen Rohstoffgemenges entstanden ist. Die Glasfritte wird als Rohstoff für die Herstellung von Emails verwendet. Die Emailherstellung erfolgt durch das Aufschmelzen der Glasfritte und zugegebener Komponenten, wie Farbpigmente oder Füllstoffe, auf ein Werkstück aus Metall oder Glas. Keramische Farben werden deshalb auch oft als Emails oder Glasemails bezeichnet. Eine Glasfritte wird durch das Erschmelzen und anschließende Abschrecken einer Glasmasse hergestellt. Die erhaltene Glasfritte wird auf Partikelgrößen bevorzugt < 40 µm gemahlen und gegebenenfalls mit den Zusatzstoffen (Pigmente, Füllstoffe) vermischt. Das Pulver wird in der Regel mit einem Suspendiermittel, zum Beispiel Siebdrucköl, angepastet und bevorzugt mittels Siebdruck auf den zu dekorierenden Gegenstand aufgebracht. Anschließend erfolgt der Einbrennprozess, wobei die Glasfritte erweicht und einen Glasfluss auf der Trägersubstratoberfläche bildet, in dem die Zusatzstoffe eingebettet und auf dem Trägersubstrat fixiert werden. Eine ausreichende Haftung der keramischen Farbe muss damit unterhalb der Verformungstemperatur des Trägersubstrats stattfinden.
Deshalb ist es insbesondere für die Dekoration beispielsweise von Borosilicatgläsern mit Transformationstemperaturen von ca. 530 °C notwendig, niedrigschmelzende Glasfritten zu verwenden, die unterhalb von 750 °C einbrennbar sind.
Als Glasfritte können alle typischen Glassorten Verwendung finden.

Vorzugsweise ist die Titanverbindung Titandioxid, vorzugsweise in Rutil-Struktur. Bei der Rutil-Struktur handelt es sich um eine der vier Kristallmodifikationen von Titandioxid, wie sie aus der Fachliteratur bekannt ist. Die Titandioxid-Pigmente in Rutil-Struktur haben eine Brechzahl von n = 2,75 und absorbieren Anteile des sichtbaren Lichtes bereits bei Wellenlängen um 430 nm. Sie weisen eine Härte (nach Mohs) von 6 bis 7 auf.

In weiter bevorzugter Ausgestaltung weist die Pigmentschicht Ruß oder Graphit zur Bereitstellung des für die Synthese von Titancarbid notwendigen freien Kohlenstoffs auf. Der Ruß spaltet unter Energieeinstrahlung, insbesondere unter Lasereinstrahlung auf und bildet dabei freien Kohlenstoff. Des Weiteren kann der freie Kohlenstoff auch aus der unter Energieeinwirkung, insbesondere durch Laserbestrahlung, zersetzten, verdampften, oxydierten, depolymerisierten und/oder pyrolysierten Polymermatrix stammen.

Vorzugsweise wird neutraler Ruß mit einem pH-Wert von 6 bis 8 verwendet. Dies ist insbesondere im Hinblick auf eine einfache Handhabung und zur Vermeidung spezieller Sicherheitsvorschriften im Umgang mit sauren oder basischen Materialen bevorzugt. Bevorzugt kommen vorwiegend Thermalruß, Acetylenruß und Flammruß in Frage. Besonders bevorzugt wird Flammruß. Der pH-Wert von Flammruß liegt üblicherweise bei 7 bis 8, von Thermalruß bei 7 bis 9 und von Acetylenruß bei 5 bis 8. Der pH-Wert von Furnacerußen liegt üblicherweise bei 9 bis 11, das heißt, diese sind stark basisch. Der pH-Wert oxidierter Gasruße liegt üblicherweise bei 2,5 bis 6, das heißt, diese sind sauer.

Die Verwendung derartiger saurer oder basischer Ruße ist jedoch grundsätzlich nicht ausgeschlossen.

Die genannten Pigmentruße sind außerordentlich beständig gegen Chemikalien und zeichnen sich durch hohe Lichtechtheit und Witterungsbeständigkeit aus. Aufgrund der sehr hohen Farbtiefe und Farbstärke sowie anderer spezifischer Eigenschaften sind Pigmentruße die am häufigsten eingesetzten Schwarzpigmente. Die technische Herstellung von Pigmentrußen erfolgt durch thermisch-oxidative beziehungsweise thermische Spaltung von Kohlenwasserstoffen. Pigmentruße werden fast ausschließlich nach den aus der Literatur bekannten Furnaceruß-, Degussa-Gasruß- oder Flammruß-Verfahren hergestellt.

Nach einer weiteren vorteilhaften Ausgestaltung der Erfindung ist die Polymermatrix eine strahlengehärtete Polymermatrix. Die Polymermatrix besteht vorteilhaft aus einem Lack, insbesondere aus einem gehärteten Lack, vorzugsweise einem strahlengehärteten Lack, besonders vorzugsweise aus einem elektronenstrahlengehärteten aliphatischen, difunktionellen Polyurethanacrylat-Lack. In einer alternativen Ausführungsform besteht die Polymermatrix aus Polyesteracrylat. Dieser gehärtete Lack weist eine sehr hohe Härte wie auch eine hohe Sprödigkeit auf.

Grundsätzlich sind vier Lacktypen vorteilhaft für die Polymermatrix verwendbar, sofern ihre Stabilität ausreicht, zum Beispiel säurehärtende Alkydmelaminharze, additionsvernetzende Polyurethane, radikalisch härtende Styrollacke und ähnliche. Besonders vorteilhaft sind jedoch strahlenhärtende Lacke, da sie sehr schnell ohne langwieriges Verdampfen von Lösungsmitteln oder Einwirken von Wärme aushärten. Solche Lacke sind zum Beispiel von A. Vrancken beschrieben worden (Farbe und Lack 83,3 (1977) 171).

Gemäß einer besonders vorteilhaften Ausführungsform der Erfindung weist die Pigmentschicht die folgende Zusammensetzung auf:

| | |
|---|---|
| 100 phr | Polymermatrix, insbesondere ein strahlengehärteter aliphatischer, difunktioneller Polyurethanacrylat, |
| 0,2 phr bis 2,5 phr | Ruß und |
| 45 phr bis 65 phr | Titandioxid. |

"phr" bedeutet dabei "parts per hundred resin", eine in der Polymerindustrie gebräuchliche Einheit zur Charakterisierung von Mischungszusammensetzungen, wobei alle polymeren Bestandteile (hier also die Polymermatrix) zu 100 phr gesetzt werden.

Weiter vorzugsweise ist die Zusammensetzung wie folgt:

| | |
|---|---|
| 100 phr | Polymermatrix, insbesondere ein strahlengehärteter aliphatischer, difunktioneller Polyurethanacrylat, |
| 0,4 phr | Ruß und |
| 63,2 phr | Titandioxid. |

Die Dicke der Pigmentschicht liegt vorteilhaft in einem Bereich von etwa 20 µm bis etwa 500 µm, insbesondere in einem Bereich von etwa 30 µm bis etwa 100 µm, um die an sie gestellten Anforderungen hervorragend zu erfüllen.

Zur Optimierung der Eigenschaften kann die Pigmentschicht mit einem oder mehreren Additiven wie Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Beim Auftreffen des energiereichen Laserstrahls wird die Pigmentschicht im Wesentlichen in kleinen Teilchen im Bereich des Auftreffpunkts abgesprengt, so dass der mit dem Laser erzeugte pulverisierte Abbrand der Pigmentschicht eine zahlenmittlere Teilchengröße von 0,5 µm bis 2,0 µm aufweist.

Bei Einstrahlung von Laserstrahlung, beispielsweise als Laserpuls, tritt die Strahlung beziehungsweise das Laserlicht direkt in Kontakt oder in Wechselwirkung mit der Pigmentschichtoberfläche und führt zu einer Pulverisierung der Polymermatrix. Im Falle eines Laserstrahls wird dieser durch Absorption in das Material eingekoppelt. Die Absorption hat die Auswirkung, dass Material verdampft wird, Partikel aus der Pigmentschicht herausgeschlagen werden, und es zu einer Plasmabildung kommen kann. Besonders an den Rändern der Laserstrahlexposition treten thermische Schmelzprozesse auf.

Typischerweise werden langkettige Polymerbestandteile der Pigmentschicht bei Umwandlung der eingestrahlten Energie in Wärme aufgespalten, und es entsteht unter anderem durch thermisches Cracken elementarer Kohlenstoff. Zusammenfassend partikuliert/verdampft/zersetzt sich die Polymermatrix durch den hohen Energieeintrag.

Dieser Kohlenstoff schlägt sich insbesondere in Form von Titaniumcarbid auf dem zu beschriftenden Gut nieder. Die Emissionsbestandteile bei der Beschriftung sind damit der elementar vorliegende Kohlenstoff, das TiO₂ und die Crackprodukte aus der Polymermatrix der Pigmentschicht. Folgende Reaktion vermag den Vorgang widerzuspiegeln, die als carbothermische Synthesereaktion zur Herstellung von Titancarbid beschrieben werden kann.

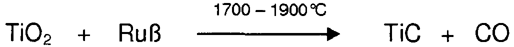

Der Energieeintrag wird durch den Wechselwirkungskoeffizienten der Reaktanten, insbesondere deren Absorptionsverhalten, sowie die Art der Strahlung und die Parametrierung der Strahlungsquelle bestimmt. Nach Auswahl der geeigneten Strahlungsquelle, insbesondere eines Lasers, wird die Steuerung vorwiegend über die Strahlungsleistung und die Beschriftungsgeschwindigkeit vorgenommen.

Titaniumcarbid (auch als Titancarbid - TiC bezeichnet) gehört zu den Nichtoxidkeramiken. Nichtoxidkeramiken zeichnen sich durch höhere kovalente und geringe ionische Bindungsanteile mit hoher chemischer und thermischer Stabilität gegenüber den Silikat- und Oxidkeramiken aus. Technisches Titancarbid enthält um etwa 19,5 Massen-% gebundenen und bis zu 0,5 Massen-% ungebundenen, so genannten freien Kohlenstoff. Der theoretische stöchiometrische Kohlenstoffgehalt liegt bei 20,05 Massen-%.

Titancarbidverbindung (TiC) weist die folgenden Eigenschaften auf:

| | |
|---|---|
| Farbe: | grau-metallisch |
| Schmelzpunkt: | 3157 °C |
| Dichte: | 4,93 g/cm³ |
| Kristallstruktur: | kubisch, besitzt dichteste Kugelpackung, beim Auffüllen aller Oktaederlücken: TiC |
| | (vergleiche Figur 4) |

Insbesondere verbinden sich mit Titancarbid folgende Eigenschaften/Vorteile:
- eine relativ hohe Härte und damit Abrieb- und Verschleißfestigkeit
- eine sehr hohe Hitzebeständigkeit
- Korrosionsbeständigkeit
- eine gute Biokompatibilität
- ferroelektrische Eigenschaften
- eine niedrige Wärmeleitfähigkeit (bei hohem Kohlenstoffanteil)
- elektrische Halbleitung
- Beständigkeit gegenüber kalten Säuren und Laugen

Aufgrund der Bildung von Einlagerungsverbindungen oder interstitiellen Verbindungen (Besetzung von Zwischengitterplätzen), können kleine Kohlenstoffatome auf Zwischengitterplätzen oder Lücken des Kristallgitters eingelagert werden, die dann dem Titancarbid eine schwarze Farbe geben. Daraus resultiert letztendlich eine kontrastreiche schwarze Beschriftung auf dem zu beschriftenden Substrat.

Mit anderen Worten, die sehr kontrastreiche Beschriftung auf dem zu beschriftenden Substrat entsteht dadurch, dass sich Titancarbid auf dem Substrat niederschlägt, wobei in die Lücken des Kristallgitters freie Kohlenstoffatome eindringen, die beispielsweise aus dem Ruß oder aus dem gecrackten elementaren Kohlenstoff aus der Polymermatrix stammen.

Gemäß einer weiteren vorteilhaften Ausführungsform der Erfindung ist die Pigmentschicht partiell oder vollflächig mit einer insbesondere druckempfindlichen Klebemasse beschichtet. Eine derartige Ausgestaltung ist besonders vorteilhaft, um eine einfache Anwendung der Pigmentschicht zu ermöglichen. Mittels der so gebildeten (partiellen) Klebeschicht kann die Pigmentschicht auf einfache Weise während des Beschriftungsverfahrens auf dem zu markierenden Substrat festgelegt werden, ohne dass die Gefahr einer Verschiebung der Pigmentschicht besteht.

Insbesondere kann die Klebeschicht in Form von Dots oder im Siebdruck aufgebracht sein, gegebenenfalls auch als Randbedruckung, so dass die Pigmentschicht in beliebiger Art und Weise auf dem Untergrund verklebt werden kann.

Vorzugsweise handelt es sich bei der Klebemasse um Haftkleber. Die Pigmentschicht wird ein- oder beidseitig mit dem bevorzugten Haftkleber als Lösung oder Dispersion oder 100 %ig (zum Beispiel aus der Schmelze) beschichtet. Die Klebeschicht(en) können durch Wärme oder energiereiche Strahlung vernetzt und erforderlichenfalls mit Trennfolie oder Trennpapier abgedeckt werden. Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer oder Silikon geeignet.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein. Die Abstimmung der Klebemasse richtet sich insbesondere nach dem Einsatzzweck, also der Art des Klebeuntergrunds, der voraussichtlichen Klebedauer, den Umweltbedingungen etc.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Geeignete Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können, sowie weitere wie aufgeführt in Ullmanns Enzyklopädie der technischen Chemie, Band 12, Seiten 525 bis 555 (4. Auflage), Weinheim. Besonders geeignet sind alterungsstabile Harze ohne olefinische Doppelbindung wie zum Beispiel hydrierte Harze.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Geeignete Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Die Beschichtungsstärke mit Klebemasse liegt vorzugsweise im Bereich von etwa 5 g/m² bis etwa 100 g/m², insbesondere von etwa 10 g/m² bis etwa 25 g/m².

Weiter vorzugsweise ist die Pigmentschicht auf einem Träger, vorzugsweise auf einer Trägerfolie aufgebracht. Die Aufbringung erfolgt vorteilhaft durch eine Beschichtung der Pigmentschicht auf den Träger.

Als Trägerfolie lassen sich vorzugsweise Folien einsetzen, die transparent sind, insbesondere monoaxial und biaxial gereckte Folien auf Basis von Polyolefinen, Folien auf Basis von gerecktem Polyethylen oder gereckten Copolymeren, enthaltend Ethylen-und/oder Polypropyleneinheiten, gegebenenfalls auch PVC-Folien und/oder Folien auf Basis von Vinylpolymeren, Polyamiden, Polyester, Polyacetalen, Polycarbonaten. Auch PET-Folien sind hervorragend als Träger geeignet. Auch Folien auf Basis von gerecktem Polyethylen oder gereckten Copolymeren, enthaltend Ethylen- und/oder Polypropyleneinheiten, sind als Trägerfolie geeignet.

Weiter bevorzugt sind einschichtige, biaxial oder monoaxial gereckte Folien und mehrschichtige, biaxiale oder monoaxiale Folien auf Basis von Polypropylen. Folien auf Basis von Hart-PVC können ebenso verwendet wie Folien auf Basis von Weich-PVC. Folien auf Polyesterbasis, wie zum Beispiel Polyethylenterephthalat sind ebenfalls bekannt und eignen sich als Träger der Pigmentschicht.

Sodann können Teile der Pigmentschicht durch eine partiell aufgebrachte Passivierschicht deaktiviert sein, und zwar auf der Seite, die sich während des Markierprozesses mit dem Substrat in Kontakt befindet. Dadurch kann eine Markierung des Substrats schon von vornherein in bestimmten Bereichen verhindert werden. Die Passivierung kann beispielsweise in Gestalt einer Negativdarstellung der gewünschten Markierung erfolgen, so dass die Markierung selbst anschließend durch flächige Bestrahlung erfolgen kann.

Die Pigmentschicht beziehungsweise diese mit Trägerfolie und/oder Klebebeschichtung sowie allen weiteren Schichten kann im Sinne dieser Erfindung in Form aller flächigen Gebilde, beispielsweise in zwei Dimensionen ausgedehnter Folien oder Folienabschnitte, Bändern mit ausgedehnter Länge und begrenzter Breite, Bandabschnitten, Stanzlingen, Etiketten und dergleichen, vorliegen. Möglich ist auch die Wicklung einer vergleichsweise langen Pigmentschicht zu einer archimedischen Spirale, von der jeweils für den Einsatz ein Stück gewünschter Länge abgetrennt wird.

Mit der Pigmentschicht können Beschriftungen mit einer Auflösung in µm-Größenordnung erzielt werden. Weiter vorzugsweise ist die aufgebrachte Markierung ein Interferenzhologramm, da die Auflösungsqualität des Verfahrens Strukturen zur Lichtverstärkung und -auslöschung zulässt. Alternativ kann die Beschriftung auch in Form eines computergenerierten Hologramms erfolgen. Ein computergeneriertes Hologramm erlaubt durch Berechnung der Hologrammstruktur und Aufbringen dieser Struktur durch Laserbestrahlung eine Individualisierung der Kennzeichnung, die aufgrund ihrer Ausgestaltung nur schwer fälschbar ist und demzufolge einen hohen Fälschungsschutz bietet. Zudem können in eine derartige Struktur auf einfache Weise Informationen versteckt eingebracht werden.

Insbesondere bei Nutzung der Standardlaser, speziell der weitverbreiteten Nd-YAG-Festkörperlaser mit einer Wellenlänge von 1,06 µm, werden scharfe, kontrastreiche Beschriftungen und Kennzeichnungen erhalten.

Weiter vorzugsweise lässt sich die Pigmentschicht in einem Verfahren zur Markierung eines Substrats, insbesondere von Glas, verwenden, wobei die Pigmentschicht durch Andrücken in direkten Kontakt mit dem zu beschriftenden Substrat gebracht wird und anschließend die Pigmentschicht mit energiereicher Laserstrahlung bestrahlt wird. Durch die Bestrahlung wird die Polymermatrix pulverisiert, freier Kohlenstoff gebildet und in den bestrahlten Bereichen eine Markierung auf dem Substrat ausgebildet. Insbesondere die Beschriftung von Glas mittels der zuvor beschriebenen Pigmentschicht hat sich als besonders vorteilhaft erwiesen. Die Beschriftung kann mit relativ kurzen Belichtungszeiten erfolgen und wird dauerhaft mit dem Glas verbunden. Zudem kann die Beschriftung ohne sichtbare Beschädigung des Glases durchgeführt werden.

Durch den direkten Kontakt zwischen Pigmentschicht und Substrat wird ein Zwischenraum vermieden, der zu einer Vergrößerung des Reaktionsraums während der Laserbestrahlung führt. Dies hätte zur Folge, dass sich der Niederschlag auf dem Substrat über eine größere Oberfläche verteilen kann, so dass die Konturenschärfe der entstehenden Beschriftung geringer würde.

Insbesondere eignet sich dieses Verfahren zur Markierung transparenter Substrate wie zum Beispiel Glas, da die Beschriftung durch das Substrat hindurch erfolgen kann. Die Strahlung durchdringt also das Substrat, bei einem entsprechenden Gebilde wie einem Röhrchen gegebenenfalls auch mehrere Schichten des Substrats, und interagiert mit der auf dem Substrat angeordneten Pigmentschicht, wodurch, wie zuvor beschrieben wurde, die Markierung auf der der Strahlungsquelle abgewandten Substratseite ausgebildet wird.

Gerade bei der Beschriftung von Glas werden alle Vorteile der Pigmentschicht genutzt: Die Markierung erfolgt äußerst widerstandsfähig. Es wird ein sehr gutes Beschriftungsergebnis erzielt. Es zeigt sich zudem eine überraschend geringe Schmauchbildung. Die Schriftzüge zeigten direkt nach der Beschriftung eine stark kontrastreiche Beschriftung. Über trockenes oder feuchtes Abwischen der Kennzeichnungsoberfläche kann der nicht fixierte Rückstand entfernt werden.

Bevorzugt erfolgt vor dem Aufbringen der Pigmentschicht eine Reinigung der zu beschriftenden Oberfläche. Weiterhin ist es vorteilhaft, wenn nach dem Applizieren der energiereichen Laserstrahlung und somit der Markierung die Substratoberfläche von Rückständen gereinigt und/oder die nicht weiter benötigte Pigmentschicht entfernt wird. Besonders vorteilhaft ist es dabei, wenn die Pigmentschicht im Wesentlichen nur auf später zu beschriftende oder zu markierende Oberflächenbereiche aufgebracht wird.

Bevorzugt ist, wenn ein diodengepumpter Feststoffkörperlaser eingesetzt wird, die Pulsdauer des Lasers zwischen 40 und 90 ns liegt, die Ausgangsleistung 20 Watt beträgt und/oder die Beschriftungsgeschwindigkeit bei 250 mm/sec bis 750 mm/sec liegt, je nach Beschriftungsinhalten. Im Hinblick auf die fortschreitende Lasertechnologie sind jedoch auch noch kürzere Pulslängen denkbar, insbesondere bis hin zu Pulsdauern im Bereich der ps oder fs. Eine derartig kurze Pulsdauer ist insbesondere hinsichtlich kurzer Belichtungszyklen besonders vorteilhaft.

Im Falle des Zielsubstrates Glas ist die Durchstrahltechnik möglich, da die verwendete Wellenlänge von 1,064 µm für Glas durchlässig ist.

Die sich auf dem Glas einstellende Beschriftung hat eine Höhe von 0,25 µm bis 3,0 µm, je nach Beschriftungsinhalt und Parametrierung. Die Temperaturstabilität liegt nachgewiesenermaßen im Bereich von -50 °C bis 1200 °C. Die Tieftemperatur- und Hitzebeständigkeit ist aber deutlich höher. Die mechanische Beständigkeit gegenüber Abrieb ist extrem hoch (Crockmetertest (gemäß DIN EN 1096-2) > 1000 Hübe).

Die Beschriftung zeigt eine hohe Auflösungsgenauigkeit, je nach verwendeter Strahlqualität, die Linienbreite beträgt 70 µm bis 80 µm. Es sind beispielsweise maschinenlesbare 2D-Codes von 1,5 mm x 1,5 mm Kantenlänge mit einem Inhalt von 16 Zeichen darstellbar. Zudem können alle üblichen Kennzeichnungsinhalte wie Logos, Piktogramme, Zeichnungen, alphanumerische Zeichen, Sonderzeichen und Pixelgraphiken realisiert werden.

Durch die hochpräzise Darstellung von Strukturinhalten über das Laserverfahren kann die Prozessmarke als diffraktive Steuermarke in Form von Oberflächenstrukturen, als computergenerierte Hologramm oder Interferenzhologramm, in Form von Beugungsstrukturen, in Form von Diffraktionsstrukturen, in Form von Kinegrammen und/oder dergleichen aufgebracht werden und als optisch aktive Schicht mit speziellen Lesegeräten auslesbar sein. Zudem können diese Marken auch als Sicherheitselement dienen.
Durch den Laserprozess können Steuermarken äußerst genau mit einer Toleranz von +/- 0,1 µm aufgetragen werden, die eine Höhe von 0,1 bis 5 µm aufweisen.
Da die Steuermarke als optisch aktive Schicht vorliegt, ist diese bei normaler Betrachtung nicht sichtbar. Damit kann ein Bauteil unauffällig mit einer Prozessmarke ausgerüstet werden, die bei speziellen Beleuchtungsbedingungen erkenn- und auslesbar ist.
Das Bauteil beinhaltet somit keine designstörenden Marken.
Dieser Vorteil ist vergleichbar mit Fluoreszenzmarken, die als Steuerungsmarke auf Pappschachteln in der Pharmazie zum Einsatz kommen, genutzt.

Werden jedoch Positioniermarken und Justagemarken in sehr kleiner Ausführung verwendet, so dass die optischen Detektionssystem diese nur schlecht und zu langsam erkennen, können mit dem erfindungsgemäßen Verfahren Suchmarken gesetzt werden. Diese können eine größeres Element oder auch ein Suchraster sein, in deren Mittelpunkt sich die Positionier- und Justagemarke befindet.
Hierbei werden Suchmarken für ein automatisches und schnelles Finden der Positioniermarken verwendet, um Suchzeiten für die Markenortbestimmung deutlich zu verringern und einen schnellen automatisierten Einrichtprozess vorzunehmen.

Schließlich umfasst die Erfindung auch einen Glaskörper, der unter Verwendung des erfindungsgemäßen Verfahrens markiert ist. Unter dem Begriff "Glaskörper" werden dabei alle Körper aus Glas, insbesondere Scheiben, Behältnisse oder Röhren, allgemein konvex oder konkav gebogenen Glasflächen subsumiert.

Das erfindungsgemäße Verfahren bietet viele Vorteile.
Die Prozessmarken können durch die Verwendung eines Lasers in ihrer Position flexibel, hochpräzise und mit zusätzlichem Dateninhalt bauteilspezifisch erzeugt werden, sprich die Prozessmarke enthält neben dem Positionsmerkmal einen bauteilspezifischen Datensatz zur individuellen Weiterverarbeitungsinformationen.
Die Prozessmarke kann nicht sichtbar auf das Substrat aufgebracht werden, sie wäre dann durch eine spezielle Beleuchtung auslesbar.
Die optisch aktiven Schichten dienen so als Sicherheitselement.

Im Folgenden ist anhand eines Beispiels die Zusammensetzung einer Polymerschicht näher erläutert, ohne in irgendeiner Form einschränkend zu wirken:

| Substrat | Anteil [phr] |
|---|---|
| EB 284 | 85,1 |
| HDDA | 5,0 |
| DVE 3 | 9,9 |
| Ruß | 0,4 |
| Titandioxid | 63,2 |
| **Gesamt Summe** | **163,6** |

- EB 284:: Aliphatisches, difunktionelles Polyurethanacrylat (Hersteller Cytec)
- HGDDA:: Hexandioldiacrylat (Hersteller BASF
- DVE-3:: Divinylether (Hersteller ISP oder BASF)
- Ruß:: Furnaceruß mit einer Teilchengröße von 56 nm, Oberfläche 45 m²/g (Hersteller Evonik, Printex 25)
- TiO₂:: (Hersteller Kronos, Kronos 2160)

Die Zusammensetzung wird zu einer Schicht mit einer Dicke von 100 µm ausgestrichen. Aus dem Ausstrich werden Stanzlinge mit den Maßen 30 x 50 mm hergestellt.

Die Polymerschicht kann zur Erzeugung einer Prozessmarke dienen, beispielsweise werden vielfach vor dem Zusammenbau einzelne Funktionsteile mit Kalibriermarken oder Prozessmarken in Form von Justagemarken versehen, so medizinische Geräte, da entsprechende Eichungen bestimmter Bauteile oder Bauteilgruppen von diesen Geräten während der Herstellung erforderlich sind.
So kann die Kalibrierung der Manometereinheit eines Blutdruckmessgerätes vorgenommen werden, in dem die Glasabdeckung während des Zusammenbaus mit einer geeichten Skalierung bauteilindividuell erzeugt wird. Zudem wird eine Justagemarke für das Glas gebracht, damit ein zentrierter Zusammenbau mit dem Manometergehäuse ermöglicht wird. Diese Justagemarke kann somit einen Datensatz zur Ortsbestimmung beinhalten, wenn unterschiedliche Manometergehäuse zum Einsatz kommen.

Weiterhin kann beispielsweise das Verfahren für die Solarindustrie nützlich verwendet werden. Hier wird eine Prozessmarke zur Ausrichtung einer flächigen Solarabdeckplatte für Dünnschichtmodule durch alle Prozessstufen aufgetragen. Um die Position der Prozessmarke möglichst genau bestimmen zu können, können die Prozessmarken in Form eines 1D oder 2D-Codes auf das Substrat aufgebracht werden.

Neben den bereits erwähnten Kalibriermarken, die zur Skalierung, als Eichmarke oder zur Bemaßung dienen, können auch Markierungen zur Fokussierung (pathfinder, target finder, Schnittbildindikator, Prismenraster, Fokussierhilfe) oder Detektion (Prüffeld, Array, Zuschnittmarken) unter Verwendung der geschilderten Lasertransferfolien oder der Polymerschicht aufgebracht werden.

Schließlich wird anhand mehrerer Figuren das Verfahren zur Erzeugung einer Prozessmarke auf einem Glaskörper unter Verwendung einer Polymerschicht in einer vorteilhaften Ausführungsform näher erläutert, ohne damit die Erfindung unnötig einschränken zu wollen. Es zeigen
- Figur 1: die Beschriftung eines Glaskörpers mittels eines Lasers in der Durchstrahltechnik unter Verwendung einer Pigmentschicht,
- Figur 2: den Vorgang der Pulverisierung und nachfolgender Verdampfung der Polymermatrix der Pigmentschicht im Auftreffpunkt des Lasers und
- Figur 3: die Bildung der Prozessmarke auf dem Glaskörper durch Titancarbid.

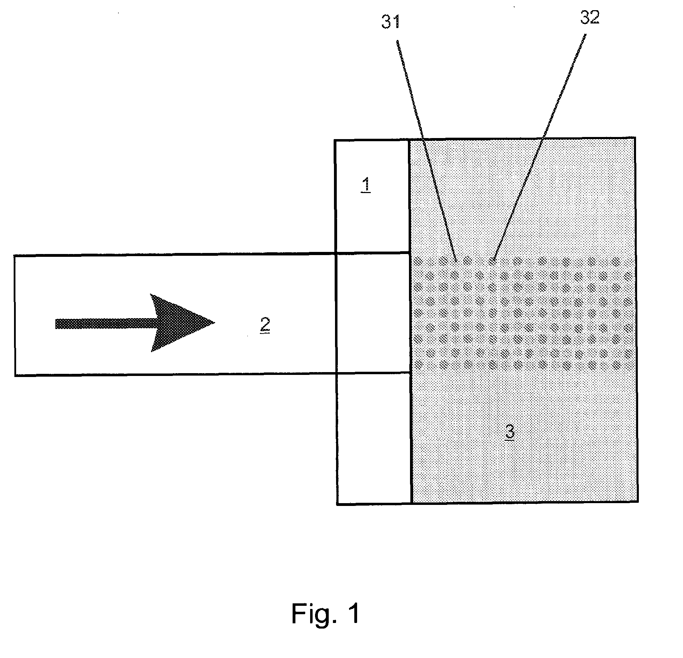

In der Figur 1 ist die Erzeugung einer Prozessmarke auf einem Glaskörper 1 mittels eines Lasers, der einen Laserstahl 2 aussendet, in der Durchstrahltechnik unter Verwendung der Pigmentschicht 3 gezeigt.

Verwendet wird ein Nd:YAG-Laser mit einer Wellenlänge von 1,064 µm, die für den Glaskörper 1 durchlässig ist. Der Laserstrahl 2 geht somit durch den Glaskörper 1 hindurch und trifft auf die Pigmentschicht 3, die in direktem Kontakt mit dem Glaskörper 1 steht. Die Pigmentschicht 3 besteht aus einer Polymermatrix, in der Titandioxid 31 und Ruß 32 eingemischt sind.

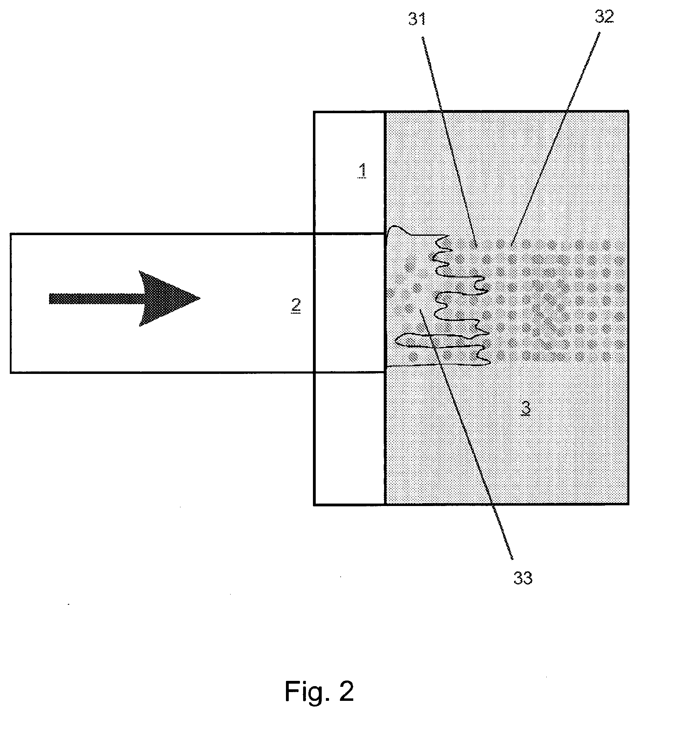

In der Figur 2 ist der Vorgang der Verdampfung mit vorheriger Pulverisierung der Polymermatrix der Pigmentschicht 3 im Auftreffpunkt des Lasers gezeigt. Durch das Auftreffen des Laserlichts 2 auf die Pigmentschicht 3 wird das Laserlicht 2 in Wärme umgewandelt, welche sich auf die Oberfläche der Pigmentschicht 3 auswirkt. Dabei wird die Polymermatrix durch Absorption des Laserlichts 2 lokal in ein Plasma 33, auch Plasmawolke genannt, überführt.

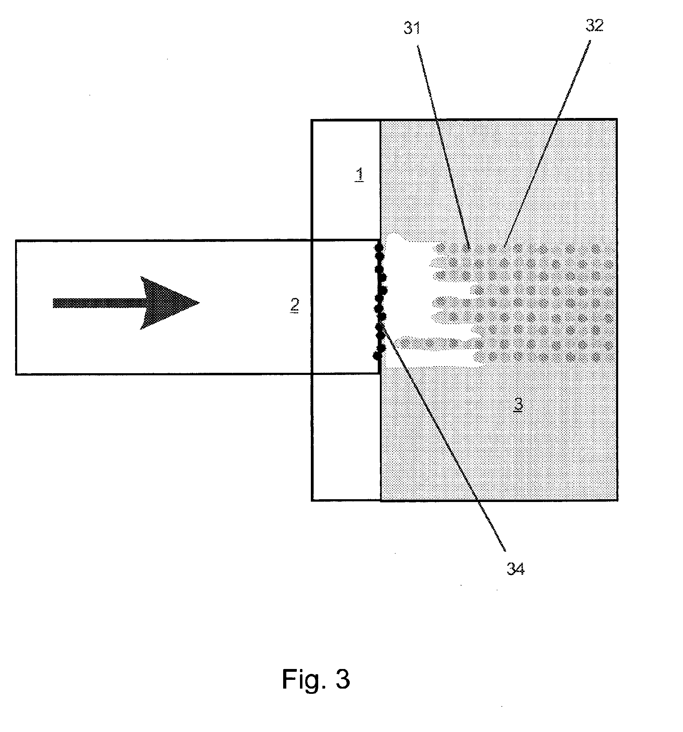

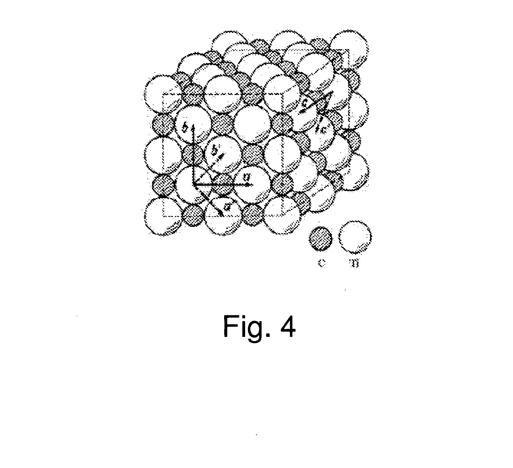

Durch die Ausbildung des Plasmas 33 findet eine Reaktion zwischen dem Titandioxid 31 und dem Ruß 32 zu Titancarbid 34 statt, das sich, wie in Figur 3 dargestellt, auf der Oberfläche des Glaskörpers 1 niederschlägt und die gewünschte Prozessmarke bildet.

## Patentansprüche

1. Verfahren zum Aufbringen einer dauerhaften Prozessmarke auf einem Produkt, insbesondere Glas, unter Verwendung eines Lasers,
**dadurch gekennzeichnet, dass**
mit dem Laser eine Pigmentschicht belasert wird, basierend auf einer Polymermatrix, welche auf eine Laserbestrahlung überwiegend mit Pulverisierung reagiert, enthaltend mindestens einen Titanspender sowie einen unter Lasereinstrahlung freien Kohlenstoff bereitstellenden Kohlenstoffspender, wobei die Pigmentschicht gegebenenfalls partiell oder vollflächig mit einer, insbesondere druckempfindlichen, Klebemasse beschichtet ist.

2. Verfahren nach Anspruch 1,
**dadurch gekennzeichnet, dass**
die Polymermatrix frei von unter Energieeinstrahlung schmelzenden Kunststoffen und/oder frei von einer Glasfritte ausgebildet ist.

3. Verfahren nach Anspruch 1 oder 2,
**dadurch gekennzeichnet, dass**
als Titanspender Titandioxid vorgesehen ist.

4. Verfahren nach zumindest einem der vorherigen Ansprüche 1 bis 3,
**dadurch gekennzeichnet, dass**
als Kohlenstoffspender Ruß und/oder die Polymermatrix vorgesehen ist, wobei der freie Kohlenstoff durch Bestrählung des Ruß gebildet wird und/oder aus der unter Strahlungseinwirkung zersetzten, verdampften, oxydierten, depolymerisierten und/oder pyrolysierten Polymermatrix stammt,
vorzugsweise, dass als Kohlenstoffspender ausschließlich Ruß und/oder die Polymermatrix vorgesehen ist.

5. Verfahren nach zumindest einem der vorherigen Ansprüche 1 bis 4,
**dadurch gekennzeichnet, dass**
der mittels Energieeinstrahlung erzeugte pulverisierte Abbrand der Pigmentschicht eine zahlenmittlere Teilchengröße von etwa 0,5 µm bis etwa 2,0 µm aufweist.

6. Verfahren nach zumindest einem der vorherigen Ansprüche 1 bis 5,
**dadurch gekennzeichnet, dass**
die Pigmentschicht durch eine partiell aufgebrachte Passivierschicht deaktiviert ist, wobei die Passivierung auf der Seite der Pigmentschicht erfolgt ist, die sich während des Markierprozesses mit dem Substrat in Kontakt befindet.

7. Verfahren nach zumindest einem der vorherigen Ansprüche 1 bis 6,
**dadurch gekennzeichnet, dass**
die Pigmentschicht durch Andrücken in direkten Kontakt mit dem zu beschriftenden Substrat gebracht wird,
die Pigmentschicht mit Laserstrahlung bestrahlt wird, wodurch die Polymermatrix pulverisiert und freier Kohlenstoff gebildet wird und
durch die Bestrahlung eine Markierung auf dem Substrat ausgebildet wird.

8. Verfahren nach zumindest einem der vorherigen Ansprüche,
**dadurch gekennzeichnet, dass**
die Prozessmarke unter Ausschluss einer Glasfritte und/oder unter Ausschluss eines unter Energieeinstrahlung schmelzenden Kunststoffes durchgeführt wird.

9. Verfahren nach zumindest einem der vorherigen Ansprüche,
**dadurch gekennzeichnet, dass**
ein transparentes Substrat, insbesondere Glas markiert wird, wobei die Bestrahlung durch das Substrat hindurch erfolgt und die Markierung auf der der Strahlungsquelle abgewandten Substratseite ausgebildet wird

10. Verfahren nach zumindest einem der vorherigen Ansprüche,
**dadurch gekennzeichnet, dass**
die Prozessmarke als diffraktive Steuermarke in Form von Oberflächenstrukturen, als computergeneriertes Hologramm oder Interferenzhologramm, in Form von Beugungsstrukturen, in Form von Diffraktionsstrukturen, in Form von Kinegrammen und/oder dergleichen aufgebracht wird und als optisch aktive Schicht mit speziellen Lesegeräten auslesbar ist.

11. Verfahren nach zumindest einem der vorherigen Ansprüche,
**dadurch gekennzeichnet, dass**
die Prozessmarke neben dem Positionsmerkmal einen bauteilspezifischen Datensatz zur individuellen Weiterverarbeitungsinformationen enthält.

12. Verfahren nach zumindest einem der vorherigen Ansprüche,
**dadurch gekennzeichnet, dass**
die Marken mit einer Positioniergenauigkeit von +/- 0,1 µm aufgetragen werden und eine Höhe von 0,1 bis 5 µm aufweisen.

13. Glaskörper, insbesondere Scheiben, Behältnisse oder Röhren, der unter Verwendung einer Pigmentschicht gemäß einem der vorherigen Ansprüche markiert ist.

14. Glaskörper nach Anspruch 13,
**dadurch gekennzeichnet, dass**
er an seiner Oberfläche Titancarbid aufweist.

## Claims

1. Method of applying a durable process mark to a product, more particularly glass, using a laser,
**characterized in that**
the laser is used to lase a pigment layer based on a polymer matrix which reacts predominantly with pulverization to laser irradiation, comprising at least one titanium donor and also a carbon donor which provides free carbon under laser irradiation, the pigment layer being coated optionally partially or wholly with an adhesive, more particularly a pressure-sensitive adhesive.

2. Method according to Claim 1,
**characterized in that**
the polymer matrix is formed free from plastics which melt under energy irradiation and/or free from a glass frit.

3. Method according to Claim 1 or 2,
**characterized in that**
titanium dioxide is provided as a titanium donor.

4. Method according to at least one of preceding Claims 1 to 3,
**characterized in that**
carbon black and/or the polymer matrix are/is provided as carbon donor(s), the free carbon being formed by irradiation of the carbon black and/or originating from the polymer matrix decomposed, evaporated, oxidized, depolymerized and/or pyrolysed under exposure to radiation,
preferably **in that** exclusively carbon black and/or the polymer matrix are/is provided as carbon donor(s).

5. Method according to at least one of preceding Claims 1 to 4,
**characterized in that**
the pulverized material removed from the pigment layer by burning generated by means of energy irradiation has a number-average particle size of about 0.5 µm to about 2.0 µm.

6. Method according to at least one of preceding Claims 1 to 5,
**characterized in that**
the pigment layer is deactivated as a result of a partially applied passivating layer, the passivation being on the side of the pigment layer that, during the marking operation, is in contact with the substrate.

7. Method according to at least one of preceding Claims 1 to 6,
**characterized in that**
the pigment layer is brought into direct contact by pressing with the substrate to be scribed,
the pigment layer is irradiated with laser radiation, as a result of which the polymer matrix is pulverized and free carbon is formed, and
as a result of the irradiation, a marking is formed on the substrate.

8. Method according to at least one of the preceding claims,
**characterized in that**
the process mark is implemented with exclusion of a glass frit and/or with exclusion of a plastic which melts under energy irradiation.

9. Method according to at least one of the preceding claims,
**characterized in that**
a transparent substrate, more particularly glass, is marked, the irradiation taking place through the substrate and the marking being formed on the side of the substrate that is remote from the radiation source.

10. Method according to at least one of the preceding claims,
**characterized in that**
the process mark is applied as a diffractive control mark in the form of surface structures, as a computer-generated hologram or interference hologram, in the form of deflection structures, in the form of diffraction structures, in the form of kinegrams and/or the like and can be read out as an optically active layer with special read devices.

11. Method according to at least one of the preceding claims,
**characterized in that**
the process mark, in addition to the positional feature, comprises a component-specific data set for individual information on further processing.

12. Method according to at least one of the preceding claims,
**characterized in that**
the marks are applied with a positioning accuracy of +/- 0.1 µm and have a height of 0.1 to 5 µm.

13. Glass article, more particularly sheets, containers or tubes, marked using a pigment layer according to any of the preceding claims.

14. Glass article according to Claim 13,
**characterized in that**
it has titanium carbide on its surface.

## Revendications

1. Procédé d'application d'une marque de processus durable sur un produit, notamment du verre, en utilisant un laser, **caractérisé en ce qu'**une couche de pigment est exposée au laser, ladite couche étant à base d'une matrice polymère, réagissant principalement par pulvérisation lors d'une exposition à un laser, contenant au moins un donneur de titane et un donneur de carbone qui fournit du carbone libre sous exposition à un laser, la couche de pigment étant revêtue éventuellement en partie ou sur l'ensemble de la surface avec un matériau adhésif, notamment sensible à la pression.

2. Procédé selon la revendication 1, **caractérisé en ce que** la matrice polymère est exempte de plastiques fondant sous un rayonnement énergétique et/ou exempte d'une fritte de verre.

3. Procédé selon la revendication 1 ou 2, **caractérisé en ce que** du dioxyde de titane est prévu en tant que donneur de titane.

4. Procédé selon au moins l'une quelconque des revendications 1 à 3 précédentes, **caractérisé en ce que** du noir de carbone et/ou la matrice polymère sont prévus en tant que donneur de carbone, le carbone libre étant formé par exposition du noir de carbone à un rayonnement et/ou provenant de la matrice polymère décomposée, évaporée, oxydée, dépolymérisée et/ou pyrolysée sous l'effet d'un rayonnement,
de préférence **en ce qu'**exclusivement du noir de carbone et/ou la matrice polymère sont prévus en tant que donneur de carbone.

5. Procédé selon au moins l'une quelconque des revendications 1 à 4 précédentes, **caractérisé en ce que** la matière pulvérisée formée par combustion de la couche de pigment au moyen du rayonnement énergétique présente une taille de particule moyenne en nombre d'environ 0,5 µm à environ 2,0 µm.

6. Procédé selon au moins l'une quelconque des revendications 1 à 5 précédentes, **caractérisé en ce que** la couche de pigment est désactivée par une couche de passivation partiellement appliquée, la passivation ayant lieu sur le côté de la couche de pigment qui se trouve en contact avec le substrat pendant le procédé de marquage.

7. Procédé selon au moins l'une quelconque des revendications 1 à 6 précédentes, **caractérisé en ce que** la couche de pigment est appliquée par pression en contact direct avec le substrat à marquer,
la couche de pigment est exposée à un rayonnement laser, la matrice polymère étant ainsi pulvérisée et du carbone libre étant formé, et
un marquage est formé sur le substrat par l'exposition à un rayonnement.

8. Procédé selon au moins l'une quelconque des revendications précédentes, **caractérisé en ce que** la marque de processus est réalisée avec exclusion d'une fritte de verre et/ou avec exclusion d'un plastique fondant sous un rayonnement énergétique.

9. Procédé selon au moins l'une quelconque des revendications précédentes, **caractérisé en ce qu'**un substrat transparent, notamment du verre, est marqué, l'exposition à un rayonnement ayant lieu au travers du substrat et le marquage étant formé sur le côté du substrat orienté dans la direction opposée à la source de rayonnement.

10. Procédé selon au moins l'une quelconque des revendications précédentes, **caractérisé en ce que** la marque de processus est appliquée en tant que point de repérage diffractif sous la forme de structures de surface, en tant qu'hologramme ou hologramme par interférence généré par ordinateur, sous la forme de structures de diffraction, sous la forme de kinégrammes et/ou analogues, et est lisible en tant que couche optiquement active avec des appareils de lecture particuliers.

11. Procédé selon au moins l'une quelconque des revendications précédentes, **caractérisé en ce que** la marque de processus contient, en plus de la caractéristique de position, un ensemble de données spécifique au composant comprenant des informations individuelles de transformation.

12. Procédé selon au moins l'une quelconque des revendications précédentes, **caractérisé en ce que** les marques sont appliquées avec une précision de positionnement de ± 0,1 µm et présentent une hauteur de 0,1 à 5 µm.

13. Corps en verre, notamment plaques, contenants ou tubes, qui sont marqués en utilisant une couche de pigment selon l'une quelconque des revendications précédentes.

14. Corps en verre selon la revendication 13, **caractérisé en ce qu'**il comprend du carbure de titane sur sa surface.
